# EUROPEAN PATENT APPLICATION

(11) **EP 4 848 521 A1**
(43) Date of publication of application: **02.12.2026**
(21) Application number: 24919416.8
(22) Date of filing: 01.02.2024
(51) Int. Cl.: H02J 3/44, H02J 3/38, H02J 3/32

(54) **GRID-CONNECTED SYSTEM AND SYNCHRONIZATION METHOD**

(30) Priority: 22.01.2024 CN 202410088976
(71) Applicant: Sungrow Power Supply Co., Ltd., Hefei, Anhui 230088 (CN)
(72) Inventor: XIANG, Guohua, Hefei, Anhui 230088 (CN); MA, Xiangmao, Hefei, Anhui 230088 (CN); CHENG, Lin, Hefei, Anhui 230088 (CN)
(74) Representative: Zacco Norway AS
(86) International application number: PCT/CN2024/075170
(87) International publication number: WO 2025/156318

(57) **Abstract**

A grid-connected system and a grid-connected method. The grid-connected system comprises a controller (100), a main switch (K), transformers (T1, T2, ..., Tn), and converters (10, 20, ..., N0). An output end of each converter is connected to the low-voltage side of the corresponding transformer, and the high-voltage side of the transformer is configured to be connected to a power grid by means of the main switch. The controller is configured to, when the voltage phase sequence of the high-voltage side of the transformer is inconsistent with the grid-side phase sequence of the power grid, take the grid-side phase sequence as a reference to send a phase sequence adjustment command to a converter started in an off-grid mode. The converter started in an off-grid mode is configured to, on the basis of the phase sequence adjustment command, adjust the phase sequence of the output voltage to be consistent with the grid-side phase sequence, thereby enabling grid connection in a correct phase sequence, and realizing consistency between the phase sequence of the output voltage of the converter and the grid-side phase sequence.

## Description

This application claims the priority to Chinese Patent Application No. 202410088976.2, titled "GRID-CONNECTED SYSTEM AND SYNCHRONIZATION METHOD", filed on January 22, 2024 with the China National Intellectual Property Administration, which is incorporated herein by reference in its entirety.

### FIELD

The present disclosure relates to the field of off-grid startup technology, and in particular to a grid-connection system and a grid-connection method.

### BACKGROUND

A grid-connection system includes a converter and a step-up transformer. For example, the grid-connection system may be used in large-scale photovoltaic power plants or distributed grid-connected power generation systems. The grid-connection system inverts energy from a direct-current side, and then feeds the inverted energy to a medium-and high-voltage power grid through the step-up transformer. The medium-and high-voltage power grid typically includes three phases: phase A, phase B, and phase C.

Due to construction and wiring practices, the wiring phase sequence of the ports of the converter in the grid-connection system may not be consistent with the wiring phase sequence of the medium-and high-voltage power grid, which results in a mismatch between the phase sequence of the output voltage of the converter and the phase sequence of the power grid, thereby preventing synchronization between the output voltage of the converter and the voltage of the power grid.

### SUMMARY

In view of this, a grid-connection system and a grid-connection method are provided according to the present disclosure, to perform grid connection with a correct phase sequence, ensuring that a phase sequence of an output voltage of the converter is consistent with a phase sequence of a voltage of the power grid.

A grid-connection system is provided according to the present disclosure. The grid-connection system includes a controller, a main switch, a transformer and a converter. An output terminal of the converter is connected to a low-voltage side of the transformer, and a high-voltage side of the transformer is configured to be connected to a power grid via the main switch. The controller is configured to, in response to a voltage phase sequence at the high-voltage side of the transformer being inconsistent with a grid-side phase sequence of the power grid, transmit a phase sequence regulation command with the grid-side phase sequence as a reference to a converter which is off-grid started. The converter which is off-grid started is configured to regulate a phase sequence of an output voltage to be consistent with the grid-side phase sequence based on the phase sequence regulation command.

In an embodiment, the controller is further configured to: control the converter which is off-grid started to be off-grid started up with a predetermined voltage amplitude, a predetermined frequency and a predetermined phase sequence, and detect, after the converter is off-grid started up, an converter voltage at the high-voltage side of the transformer to obtain the voltage phase sequence at the high-voltage side of the transformer.

In an embodiment, the controller is further configured to: control the converter which is which is off-grid started to be off-grid started up with an amplitude of a grid voltage, a frequency of the grid voltage, and the grid-side phase sequence, and detect, after the converter is off-grid started up, an converter voltage at the high-voltage side of the transformer to obtain the voltage phase sequence at the high-voltage side of the transformer.

In an embodiment, the grid-connection system includes N transformers and M converters, where M and N are both integers, and M is greater than or equal to N. One transformer is connected to one or more converters.

In an embodiment, the grid-connection system further includes a first voltage transformer and a second voltage transformer that are connected to the controller. The first voltage transformer is configured to detect a voltage of the power grid. The second voltage transformer is configured to detect the converter voltage at the high-voltage side of the transformer. The controller is configured to obtain the grid-side phase sequence based on the voltage of the power grid, and to obtain the voltage phase sequence at the high-voltage side of the transformer based on the converter voltage at the high-voltage side of the transformer.

In an embodiment, the converter which is off-grid started is configured to regulate the phase sequence of the output voltage to be consistent with the grid-side phase sequence based on the phase sequence regulation command by: stopping transmitting a drive signal to a switching transistor; generating a new drive signal based on the phase sequence regulation command; and driving the switching transistor by using the new drive signal, to cause the phase sequence of the output voltage to be consistent with the grid-side phase sequence.

In an embodiment, the controller is configured to obtain the grid-side phase sequence based on the voltage of the power grid by: obtaining the grid-side phase sequence based on the voltage of the power grid by using a software phase-locked loop or a hardware zero-crossing comparison circuit; and the controller is configured to obtain the voltage phase sequence at the high-voltage side of the transformer based on the converter voltage at the high-voltage side of the transformer by: obtaining the voltage phase sequence at the high-voltage side of the transformer based on the converter voltage at the high-voltage side of the transformer by using the software phase-locked loop or the hardware zero-crossing comparison circuit.

In an embodiment, the controller is further configured to: perform phase locking on a voltage at the high-voltage side of the transformer with the grid-side phase sequence as the reference, and determine that the voltage phase sequence at the high-voltage side of the transformer is inconsistent with the grid-side phase sequence of the power grid when the phase locking fails; or determine, in response to determining that a leading angle of a three-phase voltage at the high-voltage side of the transformer is inconsistent with a leading angle of the grid voltage with the grid-side phase sequence as the reference, that the voltage phase sequence at the high-voltage side of the transformer is inconsistent with the grid-side phase sequence of the power grid.

In an embodiment, the controller is further configured to control the main switch to be closed, in response to the phase sequence at the high-voltage side of the transformer being consistent with the grid-side phase sequence and an amplitude, a phase, and a frequency of the converter voltage at the high-voltage side of the transformer being respectively synchronized with an amplitude, a phase, and a frequency of the voltage of the power grid.

In an embodiment, a direct-current side of the converter is configured to be connected to at least one of a photovoltaic module or an energy storage battery.

A grid-connection method for a grid-connection system is further provided according to the present disclosure. The grid-connection system includes a controller, a main switch, a transformer and a converter. An output terminal of the converter is connected to a low-voltage side of the transformer, and a high-voltage side of the transformer is connected to a power grid via the main switch. The method includes: transmitting, in response to a voltage phase sequence at the high-voltage side of the transformer being inconsistent with a grid-side phase sequence of the power grid, a phase sequence regulation command with the grid-side phase sequence as a reference to the converter which is off-grid started; and controlling the converter which is off-grid started to regulate a phase sequence of an output voltage to be consistent with the grid-side phase sequence based on the phase sequence regulation command.

In an embodiment, the grid-connection method further includes: controlling the converter which is off-grid started to be off-grid started up with a predetermined voltage amplitude, a predetermined frequency and a predetermined phase sequence; and detecting, after the converter is off-grid started up, an converter voltage at the high-voltage side of the transformer to obtain the voltage phase sequence at the high-voltage side of the transformer.

In an embodiment, the grid-connection method further includes: controlling the converter which is off-grid started to be off-grid started up with an amplitude of a grid voltage, a frequency of the grid voltage and the grid-side phase sequence; and detecting, after the converter is off-grid started up, an converter voltage at the high-voltage side of the transformer to obtain the voltage phase sequence at the high-voltage side of the transformer.

In an embodiment, the controlling the converter which is off-grid started to regulate a phase sequence of an output voltage to be consistent with the grid-side phase sequence based on the phase sequence regulation command includes: stopping transmitting a drive signal to a switching transistor; generating a new drive signal based on the phase sequence regulation command; and driving the switching transistor by using the new drive signal, to cause the phase sequence of the output voltage to be consistent with the grid-side phase sequence.

In an embodiment, the grid-side phase sequence is obtained based on a voltage of the power grid by: obtaining the grid-side phase sequence based on the voltage of the power grid by using a software phase-locked loop or a hardware zero-crossing comparison circuit; and the voltage phase sequence at the high-voltage side of the transformer is obtained based on the converter voltage at the high-voltage side of the transformer by: obtaining the voltage phase sequence at the high-voltage side of the transformer based on the converter voltage at the high-voltage side of the transformer by using the software phase-locked loop or the hardware zero-crossing comparison circuit.

In an embodiment, it is determined that the voltage phase sequence at the high-voltage side of the transformer is inconsistent with the grid-side phase sequence of the power grid by: performing phase locking on a voltage at the high-voltage side of the transformer with the grid-side phase sequence as the reference, and determining that the voltage phase sequence at the high-voltage side of the transformer is inconsistent with the grid-side phase sequence of the power grid when the phase locking fails; or determining, in response to determining that a leading angle of a three-phase voltage at the high-voltage side of the transformer is inconsistent with a leading angle of the grid voltage with the grid-side phase sequence as the reference, that the voltage phase sequence at the high-voltage side of the transformer is inconsistent with the grid-side phase sequence of the power grid.

In an embodiment, the grid-connection method further includes: controlling the main switch to be closed, in response to the phase sequence at the high-voltage side of the transformer being consistent with the grid-side phase sequence and an amplitude, a phase, and a frequency of the converter voltage at the high-voltage side of the transformer being respectively synchronized with an amplitude, a phase, and a frequency of the voltage of the power grid.

It can be seen that the present disclosure has following beneficial effects.

With the grid-connection system according to the embodiments of the present disclosure, before grid connection and at off-grid startup, it is first determined whether the voltage phase sequence at the high-voltage side of the transformer is consistent with the grid-side phase sequence of the power grid. In response to determining that the voltage phase sequence at the high-voltage side of the transformer is inconsistent with the grid-side phase sequence of the power grid, the controller generates the phase sequence regulation command with the grid-side phase sequence as the reference, and transmits the phase sequence regulation command to the converter which is off-grid started to control the converter to regulate the phase sequence of the output voltage, thereby ensuring that the voltage phase sequence at the high-voltage side of the transformer is consistent with the grid-side phase sequence of the power grid. In this way, the output voltage of the converter and the grid voltage are synchronized, thereby enabling the converter to smoothly perform grid-connected power generation.

### BRIEF DESCRIPTION OF THE DRAWINGS

FIG. 1 is a schematic diagram of a grid-connection system according to an embodiment of the present disclosure;
FIG. 2 is a schematic diagram showing a correct phase sequence of a grid-connection system according to an embodiment of the present disclosure;
FIG. 3 is a schematic diagram showing an incorrect phase sequence of a grid-connection system according to an embodiment of the present disclosure;
FIG. 4 is a schematic diagram of a grid-connection system according to another embodiment of the present disclosure;
FIG. 5 is a schematic diagram showing a regulated phase sequence of a grid-connection system according to an embodiment of the present disclosure;
FIG. 6 is a flowchart of a grid-connection method for a grid-connection system according to an embodiment of the present disclosure; and
FIG. 7 is a flowchart of a grid-connection method for a grid-connection system according to another embodiment of the present disclosure.

### DETAILED DESCRIPTION

To enable those skilled in the art to better understand and implement the technical solutions according to the embodiments of the present disclosure, an architecture of a grid-connection system is described below in conjunction with the accompanying drawings.

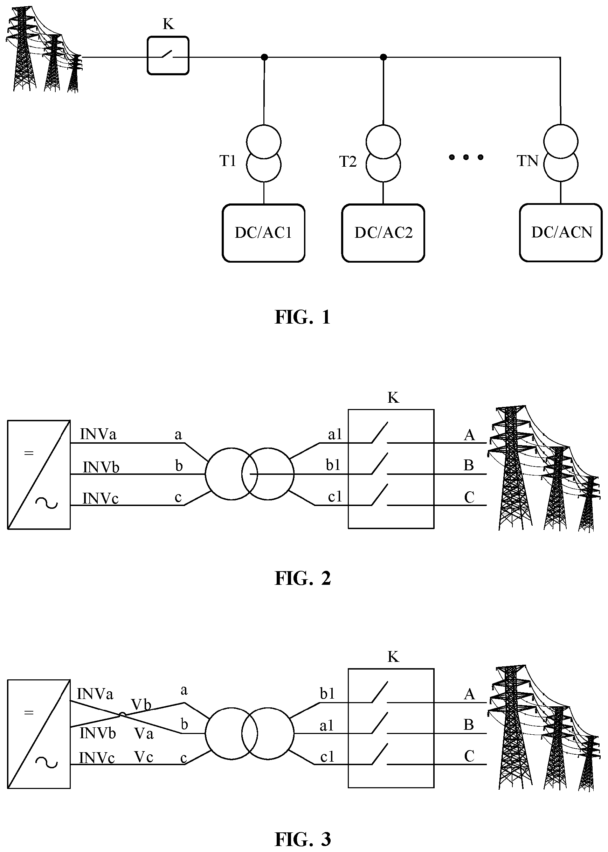

Referring to FIG. 1, FIG. 1 is a schematic diagram of a grid-connection system according to an embodiment of the present disclosure.

The grid-connection system includes M converter and N transformer, where M is an integer greater than or equal to 1, and M is greater than N. That is, there may be multiple converters or one converter, and generally there are multiple converters. N is an integer greater than or equal to 1. One transformer may be connected to one converter or may be connected to multiple converters. For example, one transformer may be connected to one or more centralized converters, or one transformer may be connected to multiple string converters.

The converter according to the embodiments of the present disclosure may be a bidirectional converter, which may perform a direct-current/alternating-current (DC/AC) conversion and perform an alternating-current/direct-current (AC/DC) conversion. The type of the direct-current power supply connected to a direct-current side of the converter is not limited in the embodiments of the present disclosure. For example, the direct-current power supply may include a photovoltaic module, or an energy storage battery, or both the photovoltaic module and the energy storage battery. The converter may be at least one of a photovoltaic converter or an energy storage converter. For example, a direct-current side of the photovoltaic converter is connected to the photovoltaic module, and a direct-current side of the energy storage converter is connected to the energy storage battery. It should be understood that when there are multiple modules, a part of the converters may be photovoltaic converters connected to photovoltaic component, and the other part of the converters may be energy storage converters connected to energy storage batteries, that is, the grid-connection system is a photovoltaic-energy storage grid-connection system. Alternatively, the grid-connection system may be a photovoltaic system or an energy storage system, which is not limited in the embodiments of the present disclosure, and the technical solutions according to the embodiments of the present disclosure may be applied to all of the above systems.

In the following embodiments, for ease of description and understanding, a schematic example where the number of the converter is equal to the number of the transformer is provided for illustration. In the embodiments of the present disclosure, examples in which N=M are taken for illustration.

In an embodiment as shown in FIG. 1, the converter is a DC/AC converter and N converters include DC/AC1, DC/AC2, ..., and DC/ACN. N transformers include T1, T2, ..., and TN. As can be seen from FIG. 1, an alternating-current side of DC/AC1 is connected to a low-voltage side of T1, an alternating current side of DC/AC2 is connected to a low-voltage side of T2, and an alternating current side of DC/ACN is connected to a low-voltage side of TN.

Each of the converters is connected to the power grid through a corresponding transformer. Since the output voltage of the converter is low, the transformer is generally a step-up transformer to match the grid voltage. The level of the grid voltage is not limited in the embodiments of the present disclosure. For example, the grid voltage may range from several kilovolts to tens of kilovolts.

For example, when the grid-connection system is a photovoltaic power generation grid-connection system, the grid-connection system may operate in a standby mode at night or on cloudy or rainy days when sunlight conditions are poor. However, the step-up transformer is always connected to the medium-and high-voltage power grid, resulting in no-load loss of the step-up transformer during the grid-connection system operating in the standby mode. To address the above issue, a main switch K may be provided between a high-voltage side of the step-up transformer and the power grid. The main switch K is opened at night, thereby reducing the no-load loss of the step-up transformer. When photovoltaic panels output energy, the converter gradually establish a voltage through a soft-start process, thereby synchronizing the voltages on both sides of the main switch K, and achieving a zero-impact closing function.

Referring to FIG. 2, FIG. 2 is a schematic diagram showing a correct phase sequence of a grid-connection system according to an embodiment of the present disclosure.

Taking the grid-connection system being a three-phase grid-connection system as an example, the three-phase grid-connection system includes three phases of A, B, and C. Under normal conditions, the three phases at ports of the converter include INVa, INVb, and INVc. A high-voltage side of the transformer is connected to a power grid through the main switch K.

The phase sequence of the three phases at the low-voltage side of the transformer are a, b and c, the phase sequence of the three phases at the high-voltage side of the transformer are a1, b1 and c1, and the grid-side phase sequence of the power grid is A, B and C. In response to the ports of the converter being wired correctly, the phase sequences among the converter, the transformer and the power grid are all matched.

Referring to FIG. 3, FIG. 3 is a schematic diagram showing an incorrect phase sequence of a grid-connection system according to an embodiment of the present disclosure.

In FIG. 3, the ports of the converter are wired incorrectly. For example, the port INVa of the converter is connected to phase b at the low-voltage side of the transformer, and the port INVa of the converter outputs a a-phase voltage. However, the outputted Va-phase voltage is connected to phase b at the low-voltage side of the transformer. Similarly, the port INVb of the converter is connected to phase a at the low-voltage side of the transformer, the port INVb of the converter outputs a Vb-phase voltage, and the outputted Vb-phase voltage is connected to phase b at the low-voltage side of the transformer.

The grid-connection system includes multiple converters with complex on-site wiring, and the phase sequence of the transformer is consistent with the phase sequence of the power grid. Therefore, incorrect wiring between the converter and the transformer may result in an inconsistency between the phase sequence of the converter and the phase sequence of the power grid, and thus the converter cannot be connected to the power grid normally.

However, the converter is incapable of identifying the grid-side phase sequence of the power grid or the wiring phase sequence at the ports of the converter. When there is energy at the direct-current side, the converter is controlled by the controller to be started slowly. In response to the wiring phase sequence at the ports of the converter no matching the grid-side phase sequence, voltage synchronization cannot be achieved, resulting in situations where the main switch cannot be closed or, if the main switch is forced to be closed, a significant inrush current, causing equipment failure and consequent loss of power generation.

To make the above objectives, features and advantages of the present disclosure more apparent and understandable, the embodiments of the present disclosure are described in detail below in conjunction with the drawings and the embodiments.

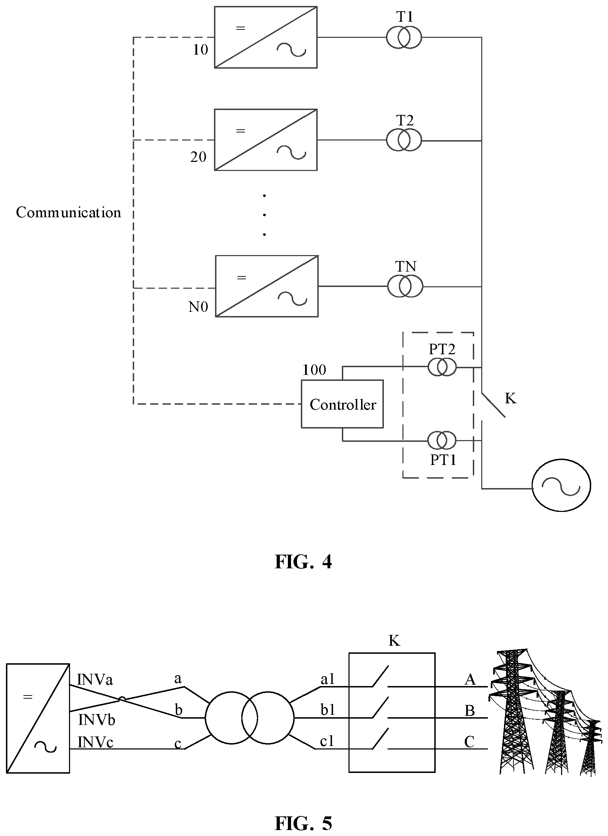

Referring to FIG. 4, FIG. 4 is a schematic diagram of a grid-connection system according to another embodiment of the present disclosure.

The grid-connection system according to the embodiment of the present disclosure includes: a controller 100, a main switch K, N transformers, and M converters, where M and N are both integers and M is greater than or equal to N. One transformer is connected to one or more converters. In the embodiment of the present disclosure, description is provided with taking M=N as an example. N transformers and N converters are in one-to-one correspondence. The N transformers include T1, T2, and up to TN, and the N converters include 10, 20, and up to N0.

An output terminal of each of the converters is connected to a low-voltage side of a corresponding transformer, and a high-voltage side of each of the transformers is configured to be connected the power grid through the main switch. That is, converter 10 is connected to the low-voltage side of transformer T1, converter 20 is connected to the low-voltage side of transformer T2, and converter N0 is connected to the low-voltage side of transformer TN. The high-voltage sides of transformers T1, T2, and up to TN are connected in parallel to a first terminal of the main switch K, and a second terminal of the main switch K is connected to the power grid. It should be understood that when the grid-connection system is a three-phase grid-connection system, the main switch K is a three-phase switch, such as the main switch K shown in FIG. 2.

The controller 100 is configured to, in response to a voltage phase sequence at the high-voltage side of the transformer being inconsistent with a grid-side phase sequence of the power grid, transmit a phase sequence regulation command with the grid-side phase sequence as a reference to at least one converter which is off-grid started.

It should be understood that the main switch K remains open until the voltage phase sequence at the high-voltage side of the transformer matches the grid-side phase sequence, and one or more converters may be off-grid started. The converters which are off-grid started are used for establishing an off-grid starting voltage. The main switch K is closed only when the voltages on both sides of the main switch K are consistent. That the voltages are consistent indicates that the amplitudes, frequencies and phases of the voltages are all consistent. That is, the main switch K is closed only when the voltage at the high-voltage side of the transformer is synchronized with the grid voltage, thereby avoiding an impact on the main switch K due to a difference between the voltages on both sides of the main switch K when closed.

The controller 100 may communicate with the converters and transmit the phase sequence regulation command to the converter which is off-grid started.

When multiple converters are off-grid started, controller 100 may transmit phase sequence regulation commands to all the off-grid started converters.

It should be understood that when only a part of the converters are off-grid started, rather than all the converters are off-grid started, the remaining converters may automatically track the off-grid started converters and establish an output voltage.

In an embodiment, the grid-connection system according to an embodiment of the present disclosure further includes a first voltage transformer PT1 and a second voltage transformer PT2 that are connected to the controller 100.

The first voltage transformer PT1 is configured to detect a voltage of the power grid. In response to the main switch K being open, PT1 may only detect the voltage of the power grid.

The second voltage transformer PT2 is configured to detect an converter voltage at the high-voltage side of the transformer. In response to the main switch K being open, PT2 may only detect the voltage at the high-voltage side of the transformer. Since the high-voltage sides of all the transformers are connected in parallel, the voltages at the high-voltage sides of all the transformers are equal.

The controller 100 is configured to obtain the grid-side phase sequence based on the voltage of the power grid, and obtain the voltage phase sequence at the high-voltage side of the transformer based on the converter voltage at the high-voltage side of the transformer.

For the grid-connection system according to the embodiments of the present disclosure, the manner in which the controller obtains the grid-side phase sequence and the voltage phase sequence at the high-voltage side of the transformer is not limited, and the manner may be a software manner or a hardware manner.

The controller may be configured to obtain the grid-side phase sequence based on the voltage of the power grid by: obtaining the grid-side phase sequence based on the voltage of the power grid by using a software phase-locked loop or a hardware zero-crossing comparison circuit.

The controller may be configured to obtain the voltage phase sequence at the high-voltage side of the transformer based on the converter voltage at the high-voltage side of the transformer by: obtaining the voltage phase sequence at the high-voltage side of the transformer based on the converter voltage at the high-voltage side of the transformer by using a software phase-locked loop or a hardware zero-crossing comparison circuit.

The off-grid started converter is configured to regulate a phase sequence of an output voltage to be consistent with the grid-side phase sequence based on the phase sequence regulation command.

Generally, the grid-side phase sequence of the power grid is correct. Therefore, the phase sequence of the output voltage of the converter is regulated with the grid-side phase sequence of the power grid as a reference, to cause the voltage phase sequence at the high-voltage side of the transformer to be consistent with the grid-side phase sequence.

With the grid-connection system according to the embodiments of the present disclosure, before grid connection and at off-grid startup, it is first determined whether the voltage phase sequence at the high-voltage side of the transformer is consistent with the grid-side phase sequence of the power grid. In response to determining that the voltage phase sequence at the high-voltage side of the transformer is inconsistent with the grid-side phase sequence of the power grid, the controller generates the phase sequence regulation command with the grid-side phase sequence as the reference, and transmits the phase sequence regulation command to the converter which is off-grid started to control the converter to regulate the phase sequence of the output voltage, thereby ensuring that the voltage phase sequence at the high-voltage side of the transformer is consistent with the grid-side phase sequence of the power grid. In this way, the output voltage of the converter and the grid voltage are synchronized, thereby enabling the converter to smoothly perform grid-connected power generation.

It should be understood that when controlling the off-grid started converter to be off-grid started up, the controller may transmit an off-grid startup command to the converter. The off-grid startup command includes an amplitude, a frequency, and a phase sequence of a voltage. In an embodiment, the controller is further configured to: control the converter which is off-grid started to be off-grid started up with a predetermined voltage amplitude, a predetermined frequency, and a predetermined phase sequence or control the converter which is off-grid started to be off-grid started up with an amplitude of a grid voltage, a frequency of the grid voltage, and the grid-side phase sequence; and detect, after the converter is off-grid started up, an converter voltage at the high-voltage side of the transformer to obtain the voltage phase sequence at the high-voltage side of the transformer. However, even if the off-grid started converter is started with the grid-side phase sequence of the power grid, the voltage phase sequence at the high-voltage side of the transformer may be inconsistent with the grid-side phase sequence due to incorrect wiring between the converter and the transformer.

Since the controller may obtain the voltage of the power grid through PT1, the controller may obtain the amplitude, the frequency, the phase, and the phase sequence of the grid voltage.

Since the off-grid started converter has already transmitted a signal to a switching transistor during the off-grid startup process, that is, the converter has already transmitted a drive signal to the switching transistor to cause the switching transistor to operate, when that the controller determines the phase sequences are inconsistent, the off-grid started converter stops signal transmission. That is, the off-grid started converter is configured to regulate the phase sequence of the output voltage to be consistent with the grid-side phase sequence based on the phase sequence regulation command by: stopping transmitting a drive signal to a switching transistor; generating a new drive signal based on the phase sequence regulation command; and driving the switching transistor by using the new drive signal, to cause the phase sequence of the output voltage to be consistent with the grid-side phase sequence.

With the new drive signal, the converter may output a voltage based on the grid-side phase sequence, as shown in FIG. 5, which is a schematic diagram showing a regulated phase sequence of a grid-connection system according to an embodiment of the present disclosure.

As shown in FIG. 5, a wiring error between the converter and the transformer causes a phase sequence inconsistency. However, the converter regulates the phase sequence of the output voltage to achieve phase sequence consistency. For example, the port INVa of the converter does not output the a-phase voltage and outputs a b-phase voltage, thereby ensuring the phase sequence consistency between the converter and the transformer even if the wiring is incorrect.

With the grid-connection system according to the embodiments of the present disclosure, the phase sequence at the high-voltage side of the transformer and the phase sequence of the power grid are controlled to be consistent by regulating the phase sequence of the voltage outputted by the converter without changing the on-site incorrect wiring, thereby ensuring the consistency between the phase sequence of the output voltage of the converter and the phase sequence of the grid voltage.

For the grid-connection system according to the embodiments of the present disclosure, the manner in which the controller determines phase sequence inconsistency is not limited. In an embodiment, in the grid-connection system according to an embodiment of the present disclosure, the controller is further configured to: perform phase locking on the voltage at the high-voltage side of the transformer with the grid-side phase sequence as the reference; and determine, in response to the phase locking failing, that the voltage phase sequence at the high-voltage side of the transformer is inconsistent with the grid-side phase sequence of the power grid. That is, when the phase locking on the transformer based on the grid-side phase sequence fails, it indicates a phase sequence inconsistency.

In another embodiment, the controller is further configured to determine, in response to determining that a leading angle of a three-phase voltage at the high-voltage side of the transformer is inconsistent with a leading angle of the grid voltage with the grid-side phase sequence as the reference, that the voltage phase sequence at the high-voltage side of the transformer is inconsistent with the grid-side phase sequence of the power grid. For example, according to the grid-side phase sequence, phase A leads phase B by 120 degrees and phase B leads phase C by 120 degrees, then if the phase sequence at the high-voltage side of the transformer obtained by the controller indicates that phase b leads phase a by 120 degrees, it may be determined that the voltage phase sequence at the high-voltage side of the transformer is inconsistent with the grid-side phase sequence of the power grid.

For the grid-connection system according to the embodiments of the present disclosure, the main switch K is closed when the voltage phase sequence at the high-voltage side of the transformer is consistent with the grid-side phase sequence of the power grid and the voltage at the high-voltage side of the transformer is synchronized with the grid voltage. In an embodiment, the controller is further configured to control the main switch to be closed, in response to the phase sequence at the high-voltage side of the transformer being consistent with the grid-side phase sequence and an amplitude, a phase, and a frequency of the converter voltage at the high-voltage side of the transformer being respectively synchronized with an amplitude, a phase, and a frequency of the voltage of the power grid.

Based on the grid-connection system according to the above embodiments, a grid-connection method for a grid-connection system is further provided according to an embodiment of the present disclosure, which is described in detail below in conjunction with the drawings.

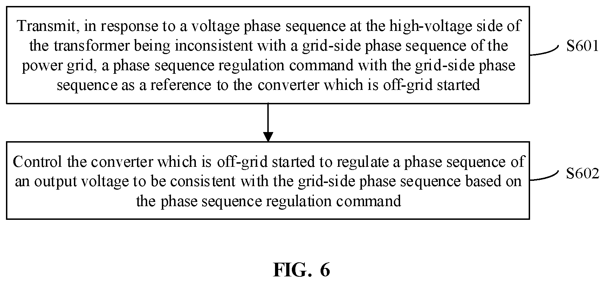

Referring to FIG. 6, FIG. 6 is a flowchart of a grid-connection method for a grid-connection system according to an embodiment of the present disclosure.

The grid-connection system includes a controller, a main switch, a transformer and a converter. An output terminal of the converter is connected to a low-voltage side of the transformer, and a high-voltage side of the transformer is connected to a power grid via the main switch.

The grid-connection method includes the following steps S601 and S602.

In S601, in response to a voltage phase sequence at the high-voltage side of the transformer being inconsistent with a grid-side phase sequence of the power grid, a phase sequence regulation command with the grid-side phase sequence as a reference is transmitted to the converter which is off-grid started. The number of the converter which is off-grid started is not limited in the present disclosure, and one or more converters may be off-grid started.

It should be understood that the main switch remains open until the voltage phase sequence at the high-voltage side of the transformer matches the grid-side phase sequence, and one or more converters may be off-grid started. The converters which are off-grid started are used for establishing an off-grid starting voltage. The main switch is closed only when the voltages on both sides of the main switch are consistent. That the voltages are consistent indicates that the amplitudes, frequencies and phases of the voltages are all consistent. That is, the main switch is closed only when the voltage at the high-voltage side of the transformer is synchronized with the grid voltage, thereby avoiding an impact on the main switch due to a difference between the voltages on both sides of the main switch when closed.

In S602, the converter which is off-grid started is controlled to regulate a phase sequence of an output voltage to be consistent with the grid-side phase sequence based on the phase sequence regulation command.

For the grid-connection method according to the embodiments of the present disclosure, the manner in which the controller obtains the grid-side phase sequence and the voltage phase sequence at the high-voltage side of the transformer is not limited, and the manner may be a software manner or a hardware manner.

The controller may obtain the grid-side phase sequence based on the voltage of the power grid by: obtaining the grid-side phase sequence based on the voltage of the power grid by using a software phase-locked loop or a hardware zero-crossing comparison circuit.

The controller may obtain the voltage phase sequence at the high-voltage side of the transformer based on the converter voltage at the high-voltage side of the transformer by: obtaining the voltage phase sequence at the high-voltage side of the transformer based on the converter voltage at the high-voltage side of the transformer by using the software phase-locked loop or the hardware zero-crossing comparison circuit.

The off-grid started converter may regulate a phase sequence of an output voltage to be consistent with the grid-side phase sequence based on the phase sequence regulation command.

Generally, the grid-side phase sequence of the power grid is correct. Therefore, the phase sequence of the output voltage of the converter is regulated with the grid-side phase sequence of the power grid as a reference, to cause the voltage phase sequence at the high-voltage side of the transformer to be consistent with the grid-side phase sequence.

With the grid-connection method for the grid-connection system according to the embodiments of the present disclosure, before grid connection and at off-grid startup, it is first determined whether the voltage phase sequence at the high-voltage side of the transformer is consistent with the grid-side phase sequence of the power grid. In response to determining that the voltage phase sequence at the high-voltage side of the transformer is inconsistent with the grid-side phase sequence of the power grid, the controller generates the phase sequence regulation command with the grid-side phase sequence as the reference, and transmits the phase sequence regulation command to the converter which is off-grid started to control the converter to regulate the phase sequence of the output voltage, thereby ensuring that the voltage phase sequence at the high-voltage side of the transformer is consistent with the grid-side phase sequence of the power grid. In this way, the output voltage of the converter and the grid voltage are synchronized, thereby enabling the converter to smoothly perform grid-connected power generation.

Detail descriptions are provided below in conjunction with the drawings.

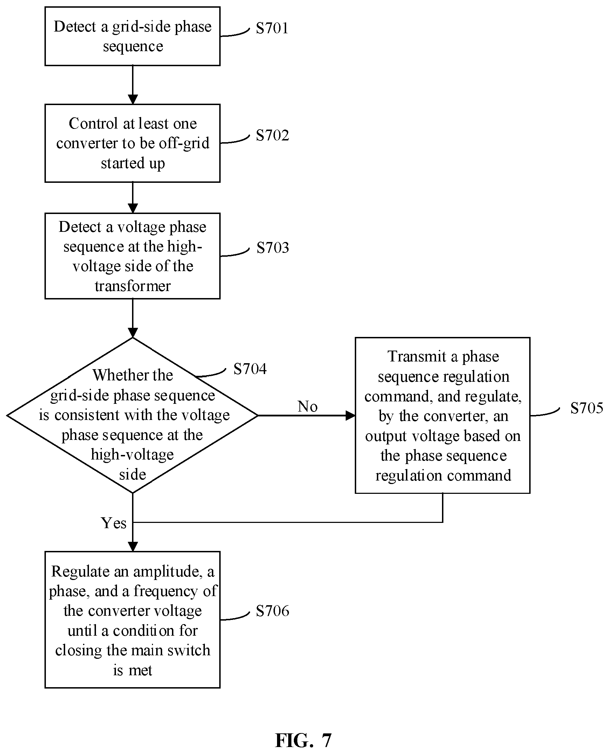

Referring to FIG. 7, FIG. 7 is a flowchart of a grid-connection method for a grid-connection system according to another embodiment of the present disclosure.

In S701, a grid-side phase sequence is detected.

In an embodiment, a grid voltage may be obtained by using a voltage transformer, and then the grid-side phase sequence is obtained based on the grid voltage.

In S702, at least one converter is controlled to be off-grid started up.

In S703, a voltage phase sequence at the high-voltage side of the transformer is detected.

In an embodiment, a voltage at the high-voltage side of the transformer may be obtained by using the voltage transformer, and then the voltage phase sequence at the high-voltage side of the transformer is obtained based on the voltage at the high-voltage side of the transformer.

In S704, it is determined whether the grid-side phase sequence is consistent with the voltage phase sequence at the high-voltage side. In response to the grid-side phase sequence being consistent with the voltage phase sequence at the high-voltage side, proceed to S706; and in response to the grid-side phase sequence being not consistent with the voltage phase sequence at the high-voltage side, proceed to S705.

In S705, a phase sequence regulation command is transmitted, and an output voltage is regulated by the converter based on the phase sequence regulation command.

In S706, an amplitude, a phase, and a frequency of the converter voltage are regulated until a condition for closing the main switch is met.

With the grid-connection method for the grid-connection system according to the embodiments of the present disclosure, the phase sequence at the high-voltage side of the transformer and the phase sequence of the power grid are controlled to be consistent by regulating the phase sequence of the voltage outputted by the converter without changing the on-site incorrect wiring, thereby ensuring the consistency between the phase sequence of the output voltage of the converter and the phase sequence of the grid voltage.

It should be noted that all the embodiments in this specification are described in a progressive way, and each embodiment focuses on the differences from other embodiments. The same and similar parts among the embodiments can be referred to each other.

The disclosed embodiments are described above so that those skilled in the art can implement or use the present disclosure. Various modifications to these embodiments will be apparent to those skilled in the art. The general principles defined herein may be implemented in other embodiments without departing from the spirit or scope of the present application. Therefore, the present disclosure shall not be limited to the embodiments described herein, but have the widest scope that complies with the principle and novelty disclosed in this specification.

## Claims

1. A grid-connection system, **characterized in that**:
the grid-connection system comprises: a controller, a main switch, a transformer, and a converter;
an output terminal of the converter is connected to a low-voltage side of the transformer, and a high-voltage side of the transformer is configured to be connected a power grid via the main switch;
the controller is configured to, in response to a voltage phase sequence at the high-voltage side of the transformer being inconsistent with a grid-side phase sequence of the power grid, transmit a phase sequence regulation command with the grid-side phase sequence as a reference to the converter which is off-grid started; and
the converter which is off-grid started is configured to regulate a phase sequence of an output voltage to be consistent with the grid-side phase sequence based on the phase sequence regulation command.

2. The grid-connection system according to claim 1, wherein the controller is further configured to: control the converter which is off-grid started to be off-grid started up with a predetermined voltage amplitude, a predetermined frequency, and a predetermined phase sequence, and detect, after the converter is off-grid started up, an converter voltage at the high-voltage side of the transformer to obtain the voltage phase sequence at the high-voltage side of the transformer.

3. The grid-connection system according to claim 1, wherein the controller is further configured to: control the converter which is off-grid started to be off-grid started up with an amplitude of a grid voltage, a frequency of the grid voltage and the grid-side phase sequence, and detect, after the converter is off-grid started up, an converter voltage at the high-voltage side of the transformer to obtain the voltage phase sequence at the high-voltage side of the transformer.

4. The grid-connection system according to any one of claims 1 to 3, wherein
the grid-connection system comprises N transformers and M converters, M and N are both integers, and M is greater than or equal to N; and one transformer is connected to one or more converters.

5. The grid-connection system according to claim 4, further comprising: a first voltage transformer and a second voltage transformer that are connected to the controller, wherein
the first voltage transformer is configured to detect a voltage of the power grid;
the second voltage transformer is configured to detect the converter voltage at the high-voltage side of the transformer; and
the controller is configured to obtain the grid-side phase sequence based on the voltage of the power grid, and obtain the voltage phase sequence at the high-voltage side of the transformer based on the converter voltage at the high-voltage side of the transformer.

6. The grid-connection system according to any one of claims 1 to 5, wherein the converter which is off-grid started is configured to regulate the phase sequence of the output voltage to be consistent with the grid-side phase sequence based on the phase sequence regulation command by:
stopping transmitting a drive signal to a switching transistor;
generating a new drive signal based on the phase sequence regulation command; and
driving the switching transistor by using the new drive signal, to cause the phase sequence of the output voltage to be consistent with the grid-side phase sequence.

7. The grid-connection system according to claim 5, wherein
the controller is configured to obtain the grid-side phase sequence based on the voltage of the power grid by: obtaining the grid-side phase sequence based on the voltage of the power grid by using a software phase-locked loop or a hardware zero-crossing comparison circuit; and
the controller is configured to obtain the voltage phase sequence at the high-voltage side of the transformer based on the converter voltage at the high-voltage side of the transformer by: obtaining the voltage phase sequence at the high-voltage side of the transformer based on the converter voltage at the high-voltage side of the transformer by using the software phase-locked loop or the hardware zero-crossing comparison circuit.

8. The grid-connection system according to claim 7, wherein the controller is further configured to:
perform phase locking on a voltage at the high-voltage side of the transformer with the grid-side phase sequence as the reference, and determine that the voltage phase sequence at the high-voltage side of the transformer is inconsistent with the grid-side phase sequence of the power grid when the phase locking fails; or
determine, in response to determining that a leading angle of a three-phase voltage at the high-voltage side of the transformer is inconsistent with a leading angle of the grid voltage with the grid-side phase sequence as the reference, that the voltage phase sequence at the high-voltage side of the transformer is inconsistent with the grid-side phase sequence of the power grid.

9. The grid-connection system according to claim 8, wherein the controller is further configured to control the main switch to be closed, in response to the phase sequence at the high-voltage side of the transformer being consistent with the grid-side phase sequence and an amplitude, a phase, and a frequency of the converter voltage at the high-voltage side of the transformer being respectively synchronized with an amplitude, a phase, and a frequency of the voltage of the power grid.

10. The grid-connection system according to claim 9, wherein a direct-current side of the converter is configured to be connected to at least one of a photovoltaic module or an energy storage battery.

11. A grid-connection method for a grid-connection system, wherein the grid-connection system comprises a controller, a main switch, a transformer and a converter, an output terminal of the converter is connected to a low-voltage side of the transformer, and a high-voltage side of the transformer is connected to a power grid via the main switch;
wherein the method is **characterized in**:
transmitting, in response to a voltage phase sequence at the high-voltage side of the transformer being inconsistent with a grid-side phase sequence of the power grid, a phase sequence regulation command with the grid-side phase sequence as a reference to the converter which is off-grid started; and
controlling the converter which is off-grid started to regulate a phase sequence of an output voltage to be consistent with the grid-side phase sequence based on the phase sequence regulation command.

12. The grid-connection method according to claim 11, further comprising:
controlling the converter which is off-grid started to be off-grid started up with a predetermined voltage amplitude, a predetermined frequency and a predetermined phase sequence; and
detecting, after the converter is off-grid started up, an converter voltage at the high-voltage side of the transformer to obtain the voltage phase sequence at the high-voltage side of the transformer.

13. The grid-connection method according to claim 11, further comprising:
controlling the converter which is off-grid started to be off-grid started up with an amplitude of a grid voltage, a frequency of the grid voltage and the grid-side phase sequence; and
detecting, after the converter is off-grid started up, an converter voltage at the high-voltage side of the transformer to obtain the voltage phase sequence at the high-voltage side of the transformer.

14. The grid-connection method according to claim 11, wherein the controlling the converter which is off-grid started to regulate a phase sequence of an output voltage to be consistent with the grid-side phase sequence based on the phase sequence regulation command comprises:
stopping transmitting a drive signal to a switching transistor;
generating a new drive signal based on the phase sequence regulation command; and
driving the switching transistor by using the new drive signal, to cause the phase sequence of the output voltage to be consistent with the grid-side phase sequence.

15. The grid-connection method according to claim 11, wherein
the grid-side phase sequence is obtained based on a voltage of the power grid by: obtaining the grid-side phase sequence based on the voltage of the power grid by using a software phase-locked loop or a hardware zero-crossing comparison circuit; and
the voltage phase sequence at the high-voltage side of the transformer is obtained based on the converter voltage at the high-voltage side of the transformer by: obtaining the voltage phase sequence at the high-voltage side of the transformer based on the converter voltage at the high-voltage side of the transformer by using the software phase-locked loop or the hardware zero-crossing comparison circuit.

16. The grid-connection method according to any one of claims 11 to 15, wherein it is determined that the voltage phase sequence at the high-voltage side of the transformer is inconsistent with the grid-side phase sequence of the power grid by:
performing phase locking on a voltage at the high-voltage side of the transformer with the grid-side phase sequence as the reference, and determining that the voltage phase sequence at the high-voltage side of the transformer is inconsistent with the grid-side phase sequence of the power grid when the phase locking fails; or
determining, in response to determining that a leading angle of a three-phase voltage at the high-voltage side of the transformer is inconsistent with a leading angle of the grid voltage with the grid-side phase sequence as the reference, that the voltage phase sequence at the high-voltage side of the transformer is inconsistent with the grid-side phase sequence of the power grid.

17. The grid-connection method according to any one of claims 11 to 15, further comprising:
controlling the main switch to be closed, in response to the phase sequence at the high-voltage side of the transformer being consistent with the grid-side phase sequence and an amplitude, a phase, and a frequency of the converter voltage at the high-voltage side of the transformer being respectively synchronized with an amplitude, a phase, and a frequency of the voltage of the power grid.
